# FASCICULE DE BREVET EUROPEEN

(11) **EP 1 566 111 B1**
(45) Date de publication et mention de la délivrance du brevet: **20.11.2013**
(21) Numéro de dépôt: 05002243.3
(22) Date de dépôt: 03.02.2005
(51) Int. Cl.: A44C 5/02

(54) **Bracelet à maillons en matériau rigide sur une âme flexible**
Armband aus starren Gliedern auf einer flexiblen Seele
Bracelet made of rigid links on a flexible core

(30) Priorité: 20.02.2004 EP 04003856
(43) Date de publication de la demande: 24.08.2005
(73) Titulaire: Montres Rado S.A., 2543 Lengnau b. Biel (CH)
(72) Inventeur: Verdon, Christian, 1034 Boussens (CH); Bach, Michael, 2500 Biel (CH)
(74) Mandataire: Ravenel, Thierry Gérard Louis

(56) Documents cités:
- EP-A- 0 030 705
- CH-A- 630 789
- DE-B- 1 081 260

## Description

La présente invention concerne un bracelet à maillons en matériau rigide sur une âme flexible. Le bracelet est formé de plusieurs maillons juxtaposés en matériau rigide, qui sont enfilés sur une âme flexible, qui permet de donner au bracelet toute la flexibilité nécessaire pour qu'il puisse se courber. Le bracelet peut être par exemple un bracelet de montre à une ou deux branches, ou un bracelet traditionnel avec une branche et des parties d'un fermoir disposées chacune à une des extrémités de la branche du bracelet.

Les maillons en matériau rigide du bracelet servent comme élément décoratif rigide, mais également à rendre le bracelet plus résistant et plus solide. Le matériau rigide utilisé doit donc être choisi d'un type convenant à la peau, c'est-à-dire anallergique, et de haute résistance à l'abrasion.

Des bracelets comportant des maillons rigides montés sur une âme centrale dotée de portions d'articulations ont déjà été divulgués dans plusieurs documents de l'art antérieur. On peut citer à ce titre le document EP 0 030 705 qui décrit un bracelet articulé. Le bracelet est composé d'une chaîne d'éléments rigides de forme sensiblement parallélépipédique qui présentent chacun deux saillies transversales réalisées chacune sur deux faces opposées. Ces saillies de chaque élément sont de section droite en L ayant une orientation différente sur chaque face pour permettre aux éléments de s'agripper les uns à la suite des autres pour former une chaîne. Les éléments rigides sont recouverts de maillons rigides en forme de cadre pour maintenir les éléments rigides assemblés. Le bracelet est articulé au niveau des saillies des éléments rigides.

Un inconvénient d'un tel bracelet articulé, décrit dans le document EP 0 030 705, est qu'il est constitué d'éléments intérieurs rigides. Ceci nécessite une configuration particulière des éléments avec leurs saillies pour permettre une articulation du bracelet. De ce fait, l'épaisseur du bracelet est très importante, car les éléments intérieurs doivent être relativement épais avec leurs saillies afin de constituer une chaîne d'éléments et assurer une articulation du bracelet.

Dans le document CH 365 242, il est décrit un bracelet à éléments articulés. Ce bracelet est constitué d'une série de plaquettes rigides à bords opposés arrondis, qui sont accrochées les unes à la suite des autres, et de bagues rigides engagées sur la série de plaquettes accrochées. Ces bagues permettent de maintenir les plaquettes accrochées tout en autorisant une articulation du bracelet au niveau des bords arrondis des plaquettes.

Comme pour le précédent document, un inconvénient d'un tel bracelet, décrit dans le document CH 365 242, est que l'épaisseur des plaquettes rigides intérieures doit être importante pour la réalisation d'un bracelet articulé.

Dans le document DE 1 081 260, il est décrit un bracelet articulé qui est composé d'éléments tubulaires, formant maillons, disposés sur une âme constituée d'éléments à crochets assemblés les uns à la suite des autres. La longueur du bracelet peut être ajustée en décrochant certains éléments à crochets une fois que les maillons les recouvrant sont retirés. Toutefois pour que les éléments à crochets, qui sont des éléments rigides, puissent être maintenus accrochés les uns à la suite des autres, il est nécessaire de prévoir au niveau de chaque portion d'accrochage une pièce ou goujon pour compléter l'espace de la largueur intérieure de chaque maillon qui les recouvre.

Même si le bracelet peut avoir une épaisseur inférieure à ceux des documents décrits ci-dessus, il est nécessaire d'ajouter une pièce complétant chaque élément rigide à crochets assemblé à l'intérieur des maillons les recouvrant pour assurer leur maintien. Cela constitue un inconvénient majeur, car cela ne permet pas d'ajuster facilement la longueur du bracelet étant donné que plusieurs pièces doivent être placées en combinaison des éléments à crochets.

Pour réduire l'épaisseur du bracelet tout en assurant une bonne flexibilité du bracelet sans éléments articulés, le document FR 2 625 879 décrit un bracelet ayant une âme flexible. Cette âme flexible est sous la forme d'une bande sur laquelle des bagues en matériau rigide sont placés.

Cependant, un inconvénient d'un tel bracelet à âme flexible est qu'il est difficile d'adapter la taille du bracelet au poignet d'un utilisateur devant le porter. Pour pouvoir réduire la taille à la dimension souhaitée, il est nécessaire de se rendre dans un magasin spécialisé, car une ou plusieurs bagues doivent être retirées et l'âme flexible doit être découpée et rattachée à une pièce terminale.

Un autre inconvénient d'un tel bracelet à âme flexible est qu'une fois que l'âme flexible a été coupée pour ajuster la taille du bracelet à un porteur du bracelet, il n'est plus possible d'agrandir sa taille pour un autre porteur du bracelet.

La présente invention a donc pour but de pallier les inconvénients de l'art antérieur décrit ci-dessus en foumissant un bracelet de faible épaisseur qui comprend des maillons en matériau rigide sur une âme flexible, et dont la taille du bracelet peut être facilement ajustée.

A cet effet, la présente invention a pour objet un bracelet citê ci-devant qui se caractérise en ce que l'âme flexible est formée sur une partie de sa longueur d'éléments flexibles assemblés de manière amovible les uns à la suite des autres, en ce que les éléments flexibles dans le sens de la longueur de l'âme flexible comprennent chacun sur deux côtés opposés une première portion d'assemblage et une seconde portion d'assemblage complémentaire à la première portion d'assemblage de manière à assembler les éléments les uns à la suite des autres par emboîtement des première et seconde portions d'assemblage, et en ce que les maillons sont positionnés sur l'âme flexible pour maintenir les éléments flexibles dans leur position assemblée en recouvrant les portions emboîtées.

Un avantage du bracelet selon l'invention, est qu'il est facile d'ajuster la taille du bracelet en retirant ou en ajoutant au moins un élément flexible de l'âme flexible ainsi qu'un ou plusieurs maillons. Pour réduire la taille du bracelet en partant depuis une extrémité du bracelet, une pièce d'extrémité en prise avec le dernier élément flexible doit tout d'abord être retirée. Ensuite de quoi au moins le dernier maillon est retiré en le faisant glisser sur l'âme flexible du côté de son extrémité libre. En retirant ce dernier maillon qui recouvrait des portions assemblées de deux éléments flexibles adjacents, cela permet au dernier élément d'être désassemblé de l'élément auquel il était rattaché. Ces opérations peuvent être réalisées successivement ou en une fois pour le retrait de plusieurs maillons et éléments flexibles jusqu'à ajuster la taille du bracelet au poignet d'un utilisateur.

Avantageusement, chaque élément flexible comprend sur un côté une première portion d'assemblage et sur un côté opposé une seconde portion d'assemblage de forme complémentaire à la première portion d'assemblage. De cette manière, les éléments peuvent être assemblés les uns à la suite des autres en emboîtant leurs portions complémentaires d'assemblage. Une fois, que les éléments flexibles de l'âme flexible sont assemblés, l'âme flexible forme une bande flexible d'épaisseur uniforme sur la majeure partie de sa longueur. Bien entendu, uniquement une partie de l'âme flexible peut être composée d'éléments flexibles de taille égale, car l'ajustement de la taille du bracelet ne se fait pas sur toute la longueur du bracelet.

Avantageusement, la première portion d'assemblage de chaque élément flexible peut avoir une forme de T ou en queue d'aronde, alors que la seconde portion d'assemblage a une ouverture en forme de T ou en queue d'aronde complémentaire à la première portion d'assemblage.

Avantageusement, l'âme flexible est réalisée en un matériau à mémoire de forme pour ses qualités de super-élasticité. Ce matériau à mémoire de forme peut être un alliage métallique composé de titane et de nickel, ou un matériau composite plastique. L'épaisseur de l'âme flexible peut être inférieure à 1 mm, par exemple voisine de 0,4 mm, mais de préférence égale à 0,2 mm. L'âme réalisée avec ce matériau peut ainsi supporter des efforts de traction ou de torsion importants sans rupture tout en assurant une bonne flexibilité au bracelet. Grâce à ce matériau super-élastique à mémoire de forme de l'âme flexible, il est possible de donner une forme au repos à l'âme correspondant à la forme du poignet par un traitement thermique. De plus avec ce matériau super-élastique, l'élasticité peut être plus de quatre fois supérieure à celle d'un acier à ressort.

Avantageusement, les maillons en matériau rigide peuvent être en céramique, en cermet ou en métal dur avec une épaisseur inférieure à 3 mm, de préférence voisine de 2 mm. De cette manière, le bracelet peut être réalisé à faible épaisseur tout en lui conférant une haute résistance et sécurité à la rupture. De plus, le matériau des maillons est choisi pour être anallergique et biocompatible.

Comme les différentes parties composant le bracelet sont faciles à réaliser et que l'ajustement de la taille du bracelet peut être facilement réalisé, les coûts sont réduits.

Les buts, avantages et caractéristiques du bracelet à maillons rigides sur une âme flexible apparaîtront mieux dans la description suivante de formes d'exécution de l'invention non limitatives en liaison avec les dessins dans lesquels :
Les figures 1a et 1b représentent une vue de dessus et une vue en coupe selon la ligne I-I de la figure 1a d'une première forme d'exécution d'une partie du bracelet assemblé selon l'invention,
les figures 2a et 2b représentent une vue de dessus et une vue en coupe selon la ligne II-II de la figure 2a de la première forme d'exécution d'une partie du bracelet selon l'invention, qui expliquent la manière d'ajuster la taille du bracelet,
les figures 3a à 3c représentent une vue en coupe longitudinale d'une partie du bracelet dans une position rectiligne, dans une position légèrement courbée et dans une position fortement courbée avec une variante de réalisation des maillons du bracelet selon l'invention, et
les figures 4a et 4b représentent une vue de dessus et une vue en coupe selon la ligne III-III de la figure 4a d'une seconde forme d'exécution d'une partie du bracelet selon l'invention, qui expliquent la manière d'ajuster la taille du bracelet.

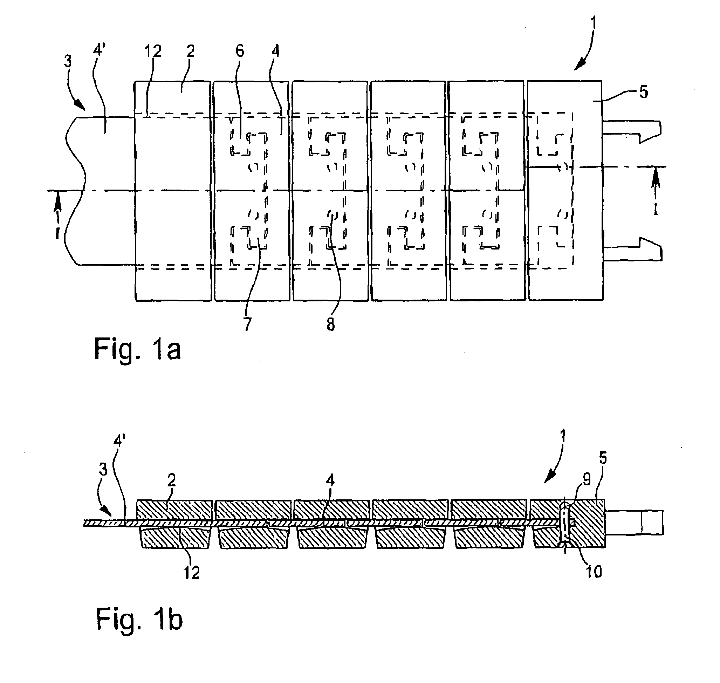

En référence aux figures 1a et 1b, une partie d'une branche du bracelet 1 dans une position assemblée est représentée de manière simplifiée. Le bracelet 1 comprend une âme flexible 3 sur laquelle sont enfilés plusieurs maillons en matériau rigide 2, et une pièce terminale 5 fixée à une extrémité de l'âme flexible. La pièce terminale 5 peut être une partie d'un fermoir, comme représenté, ou une partie de liaison à une boîte de montre non représentée. L'autre extrémité de l'âme flexible, non représentée, peut soit être fixée de manière traditionnelle à une boîte de montre, soit être fixée à une autre pièce terminale servant de partie complémentaire à la pièce terminale 5.

L'âme flexible 3 est composée d'une première partie flexible 4', et de plusieurs éléments flexibles 4 qui sont assemblés les uns à la suite des autres depuis la première partie flexible pour former une bande flexible. Les éléments flexibles 4 peuvent être de dimension égale ou différente en fonction également de la dimension des maillons 2 qui les recouvrent.

Chaque élément flexible 4 comprend, vu dans le sens de la longueur du bracelet, un premier côté avec une première portion d'assemblage 6, et un second côté avec une seconde portion d'assemblage 7 complémentaire à la première portion d'assemblage. De cette façon, les éléments flexibles 4 peuvent être assemblés de manière amovible les uns à la suite des autres par emboîtement de leurs portions d'assemblage correspondantes. Les portions d'assemblage peuvent être configurées de manière à assurer un maintien provisoire par frottement des parties en contact lors de l'emboîtement des portions complémentaires.

La première partie flexible doit donc avoir également à une extrémité une portion d'assemblage à partir de laquelle les éléments flexibles 4 sont assemblés pour former une bande. Avec cette manière d'assembler les éléments flexibles, la bande est avantageusement d'épaisseur uniforme sur la majeure partie de la longueur de l'âme flexible 3. Cette épaisseur de l'âme flexible peut être inférieure à 1 mm, de préférence voisine de 0,2 mm.

La première portion d'assemblage 7 de chaque élément flexible 4 peut avoir la forme d'un T, alors que la seconde portion d'assemblage 6 est une ouverture en forme de T complémentaire à la première portion d'assemblage 7. La première portion d'assemblage 7 d'un élément flexible 4 peut ainsi être emboîtée dans la seconde portion d'assemblage 6 d'un élément flexible adjacent. En répétant, ces opérations avec plusieurs autres éléments, une bande flexible constituant l'âme flexible est obtenue.

Bien entendu, les portions d'assemblage peuvent être réalisées avec d'autres formes, notamment avec une des portions d'assemblage comprenant au moins une tête et un bras reliant la tête à la partie centrale de chaque élément flexible. La largeur de la tête est bien entendu plus grande que la largeur du bras pour assurer un maintien longitudinal de chaque élément assemblé. Cette tête peut décrire une portion de cercle de diamètre supérieur à la largeur du bras la reliant â la partie centrale de chaque élément. L'autre portion d'assemblage doit donc être une ouverture circulaire complémentaire dans l'élément flexible.

Le matériau utilisé pour réaliser l'âme flexible peut être un matériau élastique, tel qu'en verre métallique ou super-élastique, tel qu'un matériau à mémoire de forme. Ce matériau à mémoire de forme peut être un alliage métallique composé de titane et de nickel, ou un matériau composite plastique. Ce matériau doit avoir la faculté d'être anallergique et biocompatible tout en assurant la flexibilité nécessaire du bracelet pour lui permettre de facilement se courber. Il est ainsi facile de fabriquer plusieurs éléments flexibles notamment par étampage dans plusieurs plaques ou feuilles d'un tel matériau.

Pour maintenir les éléments flexibles 4 dans une position assemblée, ils sont recouverts par des maillons 2 en matériau rigide représentés de forme générale sensiblement parallélépipédique. Ces maillons 2 forment des bagues avec une ouverture longitudinale 12 de dimension suffisante pour permettre aux maillons d'être enfilés et glissés sur l'âme flexible. L'ouverture longitudinale 12 a une surface inférieure légèrement courbée pour permettre un débattement vertical des éléments flexibles lors d'une flexion du bracelet. De plus, la partie inférieure de chaque maillon a une forme pyramidale tronquée pour pouvoir courber le bracelet par flexion de l'âme flexible.

Les maillons sont avantageusement réalisés en céramique, en cermet, en métaux durs, voire en bois avec une épaisseur inférieure à 3 mm, de préférence égale à 2 mm.

Les maillons 2 peuvent être enfilés successivement sur l'âme flexible depuis une première extrémité de l'âme jusqu'à l'autre extrémité de l'âme flexible une fois que les éléments flexibles ont été assemblés, ou au fur et à mesure que les éléments sont successivement assemblés. L'ouverture longitudinale 12 de chaque maillon a une largeur légèrement supérieure à la largeur maximale de chaque élément flexible, et une hauteur inférieure au double de l'épaisseur de chaque élément flexible 4. De préférence, la hauteur minimale de l'ouverture est légèrement supérieure à l'épaisseur de chaque élément flexible 4. De cette manière, les maillons peuvent glisser facilement sur l'âme flexible.

Une fois que les maillons 2 sont tous montés sur l'âme flexible 3 entre chaque extrémité de l'âme flexible 3, ils sont positionnés de manière que chaque zone des portions d'assemblage des éléments assemblés soit recouverte intégralement par un des maillons. De ce fait, cela permet de maintenir tous les éléments flexibles de l'âme flexible dans une position assemblée. Le positionnement des maillons 2 sur l'âme flexible 3 peut être assurée notamment par la pièce terminale 5, une fois que cette pièce terminale 5 est fixée à la dernière portion d'assemblage du dernier élément 4 ou de la première partie flexible 4'.

Pour la fixation de la pièce terminale 5 selon cette première forme d'exécution des figures 1a et 1b, la première portion d'assemblage 7 de chaque élément 4 et de la première partie 4' comprennent une ou deux ouvertures 8. La pièce terminale 5 comprend un ou deux trous borgnes 9 disposés dans une direction perpendiculaire par rapport à la longueur du bracelet. Une ou deux tiges 10 sont montées dans chaque trou borgne 9 en traversant la ou les ouvertures 8 du dernier élément flexible 4 ou de la première partie flexible 4'.

Les trous borgnes 9 peuvent être taraudés, et les deux tiges 10 peuvent être des vis qui sont vissées chacune dans un des trous 9. Bien entendu, les vis de fixation de la pièce terminale sont situées du côté du bracelet venant en contact du poignet du porteur du bracelet afin de les dissimuler.

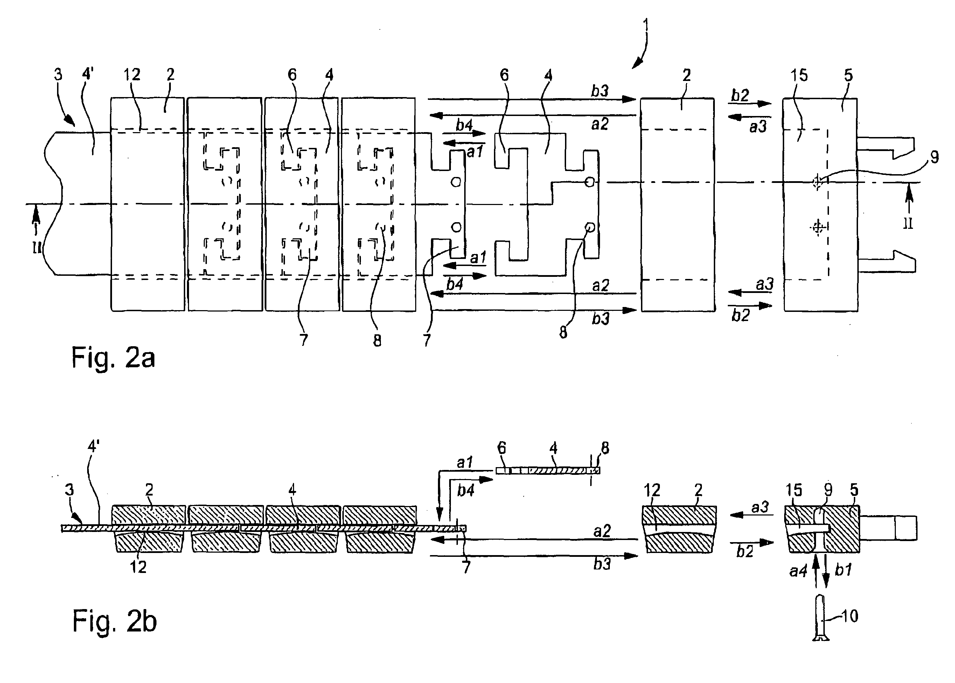

En référence aux figures 2a et 2b relative à la première forme d'exécution du bracelet, la manière d'ajuster la taille du bracelet 1 est expliquée. Il est à noter que tous les mêmes éléments du bracelet décrits ci-après portent des signes de référence identiques à ceux décrits en référence aux figures 1a et 1 b. De ce fait, il ne sera pas répété la description de tous ces éléments.

Pour simplifier l'explication relative à l'ajustement de la taille du bracelet, il n'est fait référence qu'à l'ajout ou au retrait d'un élément flexible 4 et d'un maillon 2 correspondant. Bien entendu par équivalence, l'ajout ou le retrait de plusieurs éléments et maillons peut être réalisé de la même manière.

Pour agrandir la taille du bracelet, il est tout d'abord retiré la pièce terminale 5 de la première portion d'assemblage 7 du dernier élément flexible 4. Ensuite de quoi à l'étape a1, la seconde portion d'assemblage 6 d'un élément flexible supplémentaire 4 est emboîtée dans la première portion d'assemblage 7 du dernier élément de l'âme flexible 3. Après avoir assemblé ce nouvel élément flexible 4, un nouveau maillon 2 est enfilé sur l'âme jusqu'à venir en contact du dernier précédent maillon du bracelet 1 à l'étape a2.

Une fois que le nouveau maillon 2 est positionné sur l'âme flexible, la première portion d'assemblage 7 de l'élément supplémentaire reste découverte afin de venir enfiler la pièce terminale à l'étape a3. Dès que la pièce terminale 5 est placée à l'extrémité de l'âme flexible sur la première portion d'assemblage de l'élément supplémentaire 4, les vis de fixation 10 sont vissées dans les trous taraudés 9 en passant par les deux ouvertures 8 à l'étape a4. Ainsi, la taille du bracelet a été ajustée avec un élément et un maillon supplémentaires.

Pour réduire la taille du bracelet, les vis de fixation 10 sont tout d'abord dévissées et retirées des trous borgnes 9 à l'étape b1, puis la pièce terminale 5 est retirée de l'âme flexible à l'étape b2. Après cela, il est nécessaire de faire glisser le dernier maillon 2 afin de le retirer de l'âme flexible à l'étape b3. Finalement le dernier élément flexible 4 peut être retiré en déboîtant sa seconde portion d'assemblage 6 de la première portion d'assemblage 7 de l'élément adjacent à l'étape b4. Une fois opéré le retrait d'un élément et d'un maillon du bracelet, la pièce terminale 5 est fixée à la première portion d'assemblage du dernier élément de l'âme flexible.

On comprend par ces différentes étapes expliquées ci-dessus qu'il est très facile d'ajuster la taille du bracelet au poignet de tout porteur dudit bracelet sans qu'il soit nécessaire de se rendre dans un magasin spécialisé à cet effet.

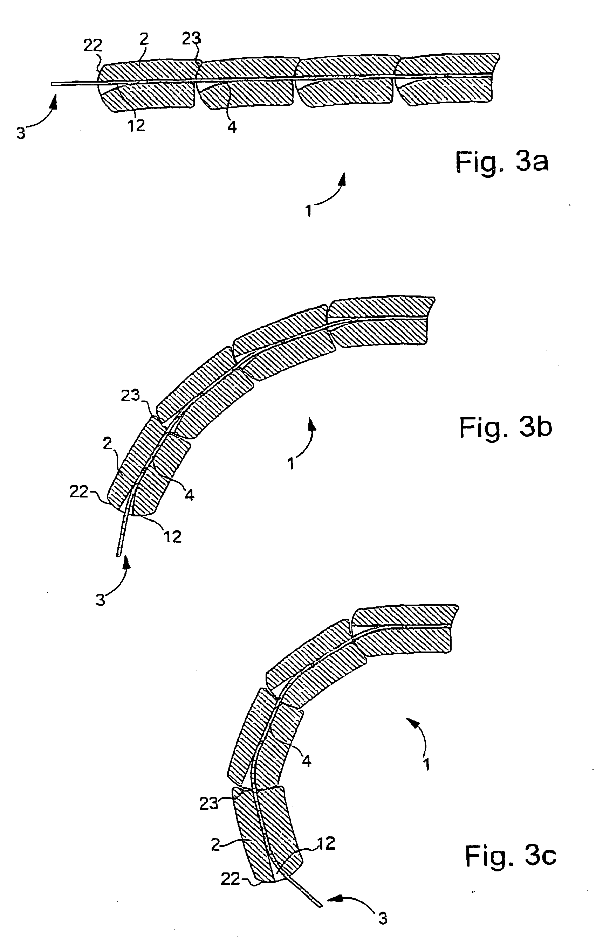

Pour illustrer la flexibilité du bracelet composé de l'âme flexible et de plusieurs maillons en matériau rigide, on peut se reporter aux figures 3a à 3c qui représentent une partie du bracelet dans une position rectiligne, dans une position légèrement courbée et dans une position fortement courbée, qui peut représenter une position maximale courbée du bracelet. Comme précédemment les mêmes éléments du bracelet décrits ci-après portent des signes de référence identiques et ne seront pas expliqués en détail.

La forme des maillons montrés dans ces figures 3a à 3c est légèrement différente de celle présentée dans les figures 1a et 1b notamment en ce qui concerne leur partie supérieure. On peut remarquer que chaque maillon possède une première portion convexe arrondie 22 dans la partie supérieure sur une première face et une seconde portion concave arrondie 23 sur une seconde face opposée. Ainsi par juxtaposition des maillons 2 sur l'âme flexible 3, la première portion convexe 22 d'un maillon vient à l'intérieur de la seconde portion concave d'un maillon adjacent.

En courbant le bracelet 1 comme montré aux figures 3b et 3c, il est constaté une flexion des éléments flexibles 4 de l'âme flexible qui peuvent bouger verticalement dans l'ouverture longitudinale 12. Grâce à cette âme flexible 3 et sans l'emploi de goupilles d'articulation, il est possible de courber facilement ledit bracelet, notamment jusqu'à une position maximale comme par exemple montrée à la figure 3c.

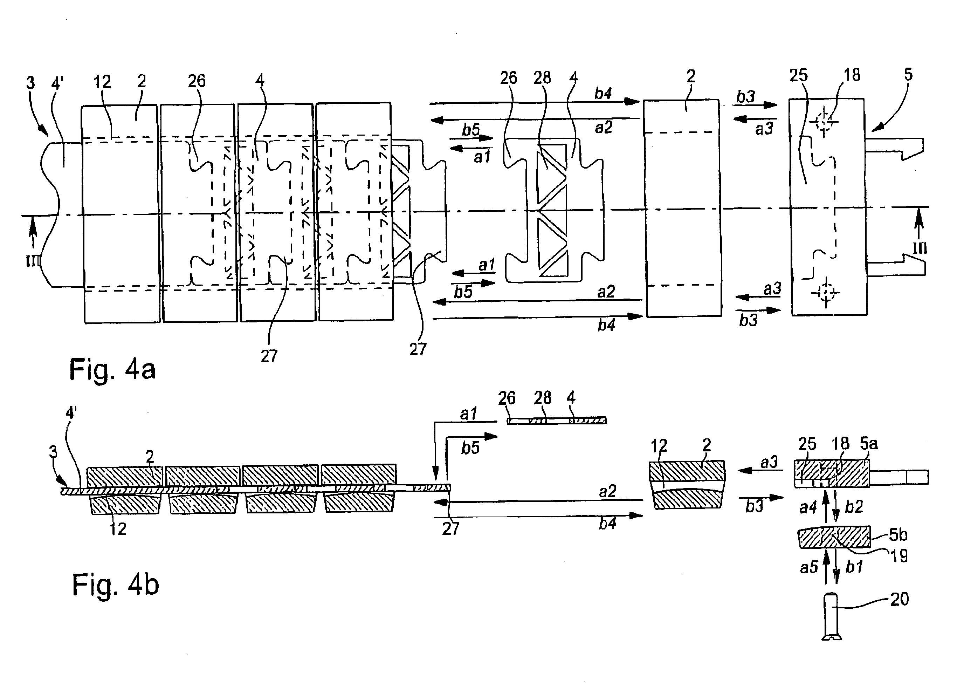

En référence aux figures 4a et 4b relative à une seconde forme d'exécution du bracelet, la manière d'ajuster la taille du bracelet 1 est expliquée. Il est à noter que tous les mêmes éléments du bracelet décrits ci-après portent des signes de référence identiques à ceux décrits en référence aux figures 1a et 1b, à l'exception des portions d'assemblage qui diffèrent de ceux précédemment décrits. De ce fait, il ne sera pas répété la description de tous les éléments déjà décrits.

Pour simplifier l'explication relative à l'ajustement de la taille du bracelet, il n'est fait référence qu'à l'ajout ou au retrait d'un élément flexible 4 et d'un maillon 2 correspondant comme pour la première forme d'exécution des figures 2a et 2b. Bien entendu par équivalence, l'ajout ou le retrait de plusieurs éléments et maillons peut être réalisé de la même manière.

La première portion d'assemblage 27 est de forme trapézoïdale ou en queue d'aronde en vue de dessus et la seconde portion d'assemblage 26 est une ouverture de forme trapézoïdale ou en queue d'aronde complémentaire à la première portion. Il est également pratiqué dans une partie centrale de certains éléments, des ouvertures 28 afin de pouvoir ajuster la force de rappel du bracelet en flexion. Toutefois, il aurait pu également être imaginé de réduire par endroit l'épaisseur de chaque élément flexible, ce qui peut être défavorable car l'épaisseur générale de l'âme flexible est déjà fortement réduite.

Dans cette seconde forme d'exécution, il est à noter que la pièce terminale 5 est composée d'une première partie 5a et d'une seconde partie 5b. La seconde partie 5b est fixée à la première partie 5a à l'aide de deux vis 20 passant dans des trous 19 de la seconde partie 5b et vissées chacune dans un taraudage correspondant 18 de la première partie 5a.

Une fois que la seconde partie 5b est fixée à la première partie 5a, la pièce terminale 5 comprend un logement 25 de forme complémentaire à la première portion d'assemblage 27 d'un élément flexible. De ce fait, il n'est plus nécessaire de prévoir des ouvertures de fixation dans chaque élément et dans la première partie flexible 4' de l'âme flexible, car la première portion d'assemblage vient se loger dans le logement 25 de la pièce terminale.

Pour agrandir la taille du bracelet, il est tout d'abord retirer la pièce terminale 5 de la première portion d'assemblage 27 du dernier élément flexible 4. Ensuite de quoi à l'étape a1, la seconde portion d'assemblage 26 d'un élément flexible supplémentaire 4 est emboîtée dans la première portion d'assemblage 27 du dernier élément de l'âme flexible 3. Après avoir assemblé ce nouvel élément flexible 4, un nouveau maillon 2 est enfilé sur l'âme jusqu'à venir en contact du dernier précédent maillon du bracelet 1 à l'étape a2.

Une fois que le nouveau maillon 2 est positionné sur l'âme flexible 3, la première portion d'assemblage 27 de l'élément supplémentaire reste découverte afin de pouvoir le loger dans le logement 25 de la première partie 5a de la pièce terminale 5 à l'étape a3. Dès que la première partie 5a de la pièce terminale 5 est placée à l'extrémité de l'âme flexible sur la première portion d'assemblage de l'élément supplémentaire 4, la seconde partie 5b est appliquée contre la première partie 5a à l'étape a4. Finalement, les vis de fixation 20 sont vissées dans les trous taraudés 18 à l'étape a5. Ainsi, la taille du bracelet a été ajustée avec un élément et un maillon supplémentaires.

Pour réduire la taille du bracelet, les vis de fixation 20 sont tout d'abord dévissées et retirées des trous borgnes taraudés à l'étape b1, puis la seconde partie 5b de la pièce terminale 5 est retirée à l'étape b2. Après cela, la première partie 5a de la pièce terminale est enlevée de la première portion d'assemblage du dernier élément 4 à l'étape b3. Le dernier maillon 2 est retiré en le faisant glisser sur l'âme flexible à l'étape b4. Finalement le dernier élément flexible 4 peut être retiré en déboîtant sa seconde portion d'assemblage 26 de la première portion d'assemblage 27 de l'élément adjacent à l'étape b5. Une fois opéré le retrait d'un élément et d'un maillon du bracelet, la pièce d'extrémité 5 est fixée à la première portion d'assemblage du dernier élément de l'âme flexible.

Il est à noter que la pièce terminale 5 peut très bien avoir la première partie 5a articulée à l'aide d'une charnière non représentée à la seconde partie 5b, et d'autres moyens de fixation de la seconde partie 5b à la première partie 5a. Cette pièce terminale peut également être composée d'un mécanisme à pince.

Il peut être prévu que chaque maillon soit sous la forme d'un C avec les extrémités du C recourbées pour pouvoir permettre de glisser les maillons sur l'âme flexible et permettre de maintenir les éléments assemblés. Des parties ajourées peuvent être prévues sur les côtés latéraux des éléments flexibles pour augmenter la flexibilité transversale du bracelet. La pièce terminale peut être configurée pour être fixée à une seconde portion d'assemblage d'un élément ou de la première partie de l'âme flexible plutôt qu'à une première portion d'assemblage comme décrit ci-devant. Finalement, il peut être prévu dans l'ouverture de chaque maillon et sur les côtés des éléments flexibles des butées pour assurer le positionnement de chaque maillon venant s'appuyer contre une butée des éléments assemblés à recouvrir.

## Revendications

1. Bracelet (1) formé de plusieurs maillons (2) juxtaposés en matériau rigide et d'une âme flexible (3) sur laquelle sont enfilés les maillons, l'âme flexible étant formée sur une partie de sa longueur d'éléments flexibles (4) assemblés de manière amovible les uns à la suite des autres, **caractérisé en ce que** les éléments flexibles (4) dans le sens de la longueur de l'âme flexible (3) comprennent chacun sur deux côtés opposés une première portion d'assemblage (7, 27) et une seconde portion d'assemblage (6, 26) complémentaire à la première portion d'assemblage de manière à assembler les éléments les uns à la suite des autres par emboîtement des première et seconde portions d'assemblage, et **en ce que** les maillons sont positionnés sur l'âme flexible pour maintenir les éléments flexibles dans leur position assemblée en recouvrant les portions emboîtées.

2. Bracelet (1) selon la revendication 1, **caractérisé en ce que** l'âme flexible (3) avec les éléments (4) assemblés les uns à la suite des autres forment une bande flexible d'épaisseur uniforme sur la majeure partie de la longueur de l'âme.

3. Bracelet (1) selon la revendication 2, **caractérisé en ce qu'**une des portions d'assemblage (7, 27) d'un élément flexible est de forme un T ou de forme trapézoïdale ou en queue d'aronde pour pouvoir être emboîtée dans une des portions d'assemblage (6, 26) complémentaire d'un autre élément flexible adjacent.

4. Bracelet (1) selon l'une des revendications 1 à 3, **caractérisé en ce que** les maillons (2) en matériau rigide sont de forme tubulaire avec une ouverture longitudinale (12) de largeur sensiblement équivalente à la largeur des éléments flexibles (4) et de hauteur inférieure au double de l'épaisseur des éléments flexibles, et **en ce que** les maillons sont positionnés sur l'âme flexible (3) pour que les portions emboîtées (6, 7; 26, 27) de deux éléments flexibles adjacents soient entièrement recouvertes par un des maillons pour maintenir les éléments dans une position assemblée.

5. Bracelet (1) selon l'une des revendications précédentes, **caractérisé en ce que** l'âme flexible (3) sous la forme d'une bande est constituée d'un matériau élastique ou super-élastique, tel qu'un matériau à mémoire de forme d'épaisseur inférieure à 1 mm, de préférence voisine de 0.2 mm.

6. Bracelet (1) selon la revendication 5, **caractérisé en ce que** le matériau à mémoire de forme est un alliage métallique composé de titane et de nickel, ou un matériau composite plastique.

7. Bracelet (1) selon la revendication 5, **caractérisé en ce que** le matériau élastique est un matériau en verre métallique.

8. Bracelet (1) selon l'une des revendications précédentes, **caractérisé en ce que** les maillons (2) sont réalisés en céramique, en cermet ou en métaux durs, et **en ce que** l'épaisseur des maillons est inférieure à 3 mm, de préférence voisine de 2 mm.

9. Bracelet (1) selon la revendication 1, **caractérisé en ce que** les éléments flexibles (4) comprennent à travers une des portions d'assemblage (7, 27) au moins une ouverture (8) pour permettre, à travers l'ouverture du dernier élément flexible à une extrémité de l'âme le passage d'une tige de fixation (9) d'une pièce terminale (5) correspondant à un dernier maillon, cette pièce terminale fixée au dernier élément flexible assurant le positionnement sur l'âme flexible des maillons du bracelet.

10. Bracelet (1) selon la revendication 1, **caractérisé en ce qu'**une pièce terminale (5) correspondant à un dernier maillon d'une des extrémités du bracelet est fixée à une des portions d'assemblage (7, 27) libre du dernier élément flexible (4), la portion d'assemblage libre étant maintenue dans un logement (25) de forme complémentaire de la pièce terminale.

## Patentansprüche

1. Armband (1), das aus mehreren nebeneinander angeordneten Gliedern (2) aus einem starren Material und aus einem biegsamen Kern (3), auf den die Glieder aufgereiht sind, gebildet ist, wobei der flexible Kern auf einem Teil seiner Länge aus flexiblen Elementen (4) gebildet ist, die eines nach dem anderen abnehmbar angeordnet sind, **dadurch gekennzeichnet, dass** die flexiblen Elemente (4) in Richtung der Länge des flexiblen Kerns (3) jeweils auf zwei gegenüberliegenden Seiten einen ersten Montageabschnitt (7, 27) und einen zu dem ersten Montageabschnitt komplementären zweiten Montageabschnitt (6, 26) umfassen, derart, dass die Elemente eines nach dem anderen durch Einpassen des ersten und des zweiten Montageabschnitts zusammengefügt werden, und dass die Glieder auf dem flexiblen Kern positioniert sind, um die flexiblen Elemente in ihrer montierten Position zu halten, indem die eingepassten Abschnitte abgedeckt sind.

2. Armband (1) nach Anspruch 1, **dadurch gekennzeichnet, dass** der flexible Kern (3) mit den Elementen (4), die eines nach dem anderen montiert sind, auf dem größten Teil der Länge des Kerns ein flexibles Band mit gleichmäßiger Dicke bilden.

3. Armband (1) nach Anspruch 2, **dadurch gekennzeichnet, dass** einer der Montageabschnitte (7, 27) eines flexiblen Elements eine T-Form oder eine Trapezform oder eine Schwalbenschwanzform hat, um in einen der komplementären Montageabschnitte (6, 26) eines anderen benachbarten flexiblen Elementes eingepasst zu werden.

4. Armband (1) nach einem der Ansprüche 1 bis 3, **dadurch gekennzeichnet, dass** die Glieder (2) aus starrem Material eine Rohrform haben, die eine longitudinale Öffnung (12) besitzt, deren Breite zu der Breite der flexiblen Elemente (4) im Wesentlichen äquivalent ist und deren Höhe kleiner ist als die doppelte Dicke der flexiblen Elemente, und dass die Glieder auf dem flexiblen Kern (3) in der Weise positioniert sind, dass die eingepassten Abschnitte (6, 7; 26, 27) von zwei benachbarten flexiblen Elementen durch eines der Glieder vollständig abgedeckt ist, um die Elemente in einer montierten Position zu halten.

5. Armband (1) nach einem der vorhergehenden Ansprüche, **dadurch gekennzeichnet, dass** der flexible Kern (3) in Form eines Bandes aus einem elastischen oder superelastischen Material wie etwa einem Material mit Formerinnerungsvermögen mit einer Dicke kleiner als 1 mm, vorzugsweise etwa 0,2 mm, gebildet ist.

6. Armband (1) nach Anspruch 5, **dadurch gekennzeichnet, dass** das Material mit Formerinnerungsvermögen eine Metalllegierung, die aus Titan und Nickel gebildet ist, oder ein plastisches Verbundmaterial ist.

7. Armband (1) nach Anspruch 5, **dadurch gekennzeichnet, dass** das elastische Material ein Material aus metallischem Glas ist.

8. Armband (1) nach einem der vorhergehenden Ansprüche, **dadurch gekennzeichnet, dass** die Glieder (2) aus Keramik, Zement oder Hartmetallen gebildet sind und dass die Dicke der Glieder kleiner als 3 mm, vorzugsweise etwa 2 mm, ist.

9. Armband (1) nach Anspruch 1, **dadurch gekennzeichnet, dass** die flexiblen Elemente (4) durch einen der Montageabschnitte (7, 27) wenigstens eine Öffnung (8) aufweisen, um den Durchgang eines Fixierstifts (9) eines einem letzten Glied entsprechenden Abschlussteils (5) durch die Öffnung des letzten flexiblen Elementes an einem Ende des Kerns zu ermöglichen, wobei dieses am letzten flexiblen Element fixierte Abschlussteil die Positionierung der Glieder des Armbandes auf dem flexiblen Kern gewährleistet.

10. Armband (1) nach Anspruch 1, **dadurch gekennzeichnet, dass** ein Abschlussteil (5), das einem letzten Glied eines Endes des Armbandes entspricht, an einem der freien Montageabschnitte (7, 27) des letzten flexiblen Elements (4) fixiert ist, wobei der freie Montageabschnitt in einem Aufnahmesitz (25) mit einer zu dem Abschlussteil komplementären Form gehalten wird.

## Claims

1. Bracelet (1) formed of several juxtaposed links (2) made of rigid material and a flexible core (3) onto which the links are threaded, the flexible core being formed over one part of its length of flexible elements (4) removably assembled one after the other, **characterised in that** the flexible elements (4) in the direction of the length of the flexible core (3) each include on two opposite sides a first assembling portion (7, 27) and a second assembling portion (6, 26) complementary to the first assembling portion so as to assemble the elements one after the other by fitting together the first and second assembling portions, and **in that** the links are positioned on the flexible core to hold the flexible elements in their assembled position by covering the fitted together portions.

2. Bracelet (1) according to claim 1, **characterised in that** the flexible core (3) with the elements (4) assembled one after the other form a flexible strip of uniform thickness over most of the length of the core.

3. Bracelet (1) according to claim 2, **characterised in that** one of the assembling portions (7, 27) of a flexible element is T-shaped or of trapezoidal shape or dovetailed so as to be able to be fitted into one of the complementary assembling portions (6, 26) of another adjacent flexible element.

4. Bracelet (1) according to any of claims 1 to 3, **characterised in that** the links (2) made of rigid material are of tubular shape with a longitudinal opening (12) of substantially equivalent width to the width of the flexible elements (4) and whose height is less than double the thickness of the flexible elements, and **in that** the links are positioned on the flexible core (3) so that the fitted together portions (6, 7; 26, 27) of two adjacent flexible elements are entirely covered by one of the links to hold the elements in an assembled position.

5. Bracelet (1) according to any of the preceding claims, **characterised in that** the flexible core (3) in the shape of a strip is formed of an elastic or super-elastic material, such as a shape memory material of a width of less than 1 mm, preferably close to 0.2 mm.

6. Bracelet (1) according to claim 5, **characterised in that** the shape memory material is a metal alloy formed of titanium and nickel, or a composite plastic material.

7. Bracelet (1) according to claim 5, **characterised in that** the elastic material is a metallic glass material.

8. Bracelet (1) according to any of the preceding claims, **characterised in that** the links (2) are made of ceramic material, cermet or hard metals, and **in that** the thickness of the links is less than 3 mm, preferably close to 2 mm.

9. Bracelet (1) according to claim 1, **characterised in that**, through one of the assembling portions (7, 27), the flexible elements (4) comprise at least one opening (8) to allow, through the opening of the last flexible element at one end of the core, the passage of a securing stem (9) of an end piece (5) corresponding to a last link, said end piece secured to the last flexible element positioning the bracelet links on the flexible core.

10. Bracelet (1) according to claim 1, **characterised in that** one end piece (5) corresponding to a last link of one of the ends of the bracelet is secured to one of the free assembling portions (7, 27) of the last flexible element (4), the free assembling portion being held in a recess (25) of complementary shape of the end piece.
